**Europäisches Patentamt**

**European Patent Office**

**Office européen des brevets**

(19)

(11) Veröffentlichungsnummer: **0 157 017**
**A1**

(12) **EUROPÄISCHE PATENTANMELDUNG**

(21) Anmeldenummer: **84116480.9**

(22) Anmeldetag: **28.12.84**

(51) Int. Cl.⁴: **G 11 B 21/16**

(30) Priorität: **02.04.84 DE 3412231**

(43) Veröffentlichungstag der Anmeldung: **09.10.85**
**Patentblatt 85/41**

(84) Benannte Vertragsstaaten: **AT BE CH DE FR GB IT LI LU NL SE**

(71) Anmelder: **Nixdorf Computer Aktiengesellschaft,**
**Fürstenallee 7, D-4790 Paderborn (DE)**

(72) Erfinder: **Ihlenburg, Rainer, Pariser Strasse 47,**
**D-1000 Berlin 15 (DE)**
Erfinder: **Baitz, Günter, Krantorweg 13,**
**D-1000 Berlin 27 (DE)**

(74) Vertreter: **Schaumburg & Thoenes,**
**Mauerkircherstrasse 31 Postfach 86 07 48,**
**D-8000 München 86 (DE)**

(54) Trägeranordnung für Magnetköpfe eines Magnetplattenlaufwerkes.

(57) Bei einer Trägeranordnung für die Magnetköpfe eines Magnetplattenlaufwerkes, sind die die Magnetköpfe tragenden Schwenkarme (10) an einer Lagerhülse (40) befestigt, die ihrerseits über Wälzlager (24, 26) auf einer in einem Lagerbock fest einspannbaren Welle (18) drehbar gelagert ist.

## Trägeranordnung für Magnetköpfe eines Magnetplattenlaufwerkes

Die Erfindung betrifft eine Trägeranordnung für die Magnetköpfe eines Magnetplattenlaufwerkes, umfassend eine Mehrzahl von die Magnetköpfe tragenden Schwenkarmen, die mittels einer gemeinsamen Welle und Wälzlagern in einem Lagerbock schwenkbar gelagert sind.

Bei bisher bekannten Trägeranordnungen dieser Art sind die Schwenkarme auf der Welle befestigt, die im allgemeinen aus Stahl besteht. Die Welle trägt an beiden Enden Lagerzapfen, auf denen die Wälzlager sitzen, deren Außenringe in Lagerbohrungen eines im allgemeinen aus Aluminium bestehenden Lagerbockes eingesetzt sind.

Die Montage erfolgt in der Weise, daß die Lager auf die Lagerzapfen der Welle aufgesteckt und die Welle zusammen mit den Lagern durch die Lagerbohrungen und das zwischen die U-Schenkel des Lagerbockes gebrachte Paket von Schwenkarmen hindurchgesteckt wird, bis die Lager in den entsprechenden Lagerbohrungen der U-Schenkel des Lagerbockes sitzen. Eines der Lager ist als Flanschlager ausgebildet, dessen Flansch sich in eine entsprechende ringförmige Vertiefung des zugehörigen U-Schenkels legt. Das Lager wird mittels einer Andruckplatte in dem betreffenden U-Schenkel fixiert. Auf das andere Lager wird eine Ringfeder gelegt, die sich auf dem Außenring des Wälzlagers abstützt. Anschließend wird eine Druckplatte aufgeschraubt, so daß

- 2 -

0157017

die Ringfeder gespannt wird. Die Ringfeder drückt das axiale Spiel aus den Wälzlagern.

Nachteilig an dieser Lösung ist, daß die Beseitigung des Lagerspiels erst bei der Montage der Trägeranordnung erfolgen kann. Ein weiterer Nachteil besteht darin, daß aufgrund der unterschiedlichen Wärmeausdehnung des aus Aluminium bestehenden Lagerbockes und der aus Stahl bestehenden Lagerringe bei einer betriebsbedingten Erwärmung der Teile ein Spiel zwischen den Lagern und dem Lagerbock entsteht. Man hat bereits versucht, dieses Spiel durch einen Spannstift und/oder -federn zu beseitigen, welche auf das Lager einwirken und dieses in der Lagerbohrung festklemmen. Zum einen läßt sich dadurch das Spiel nicht wirksam beseitigen und zum anderen wird dadurch die Lagerachse gegenüber dem Lagerbock verstellt. Dies kann zu Problemen bei der Justierung der Magnetköpfe relativ zur Plattenoberfläche führen.

Der Erfindung liegt die Aufgabe zugrunde, eine Anordnung der eingangs genannten Art anzugeben, die einfach zu montieren und zu justieren ist und eine spielfreie Lagerung der Schwenkarme unabhängig von einer Erwärmung der Teile gewährleistet, ohne daß dadurch die Präzision der Lagerung leidet.

Diese Aufgabe wird erfindungsgemäß dadurch gelöst, daß die Schwenkarme an einer Lagerhülse befestigt sind, die ihrerseits mittels der Wälzlager auf der in dem Lagerbock fest einspannbaren Welle drehbar gelagert ist.

Aufgrund der erfindungsgemäßen Ausbildung kann die Lageranordnung vormontiert und -justiert werden. Die Lagerhülse und die Lager können aus dem gleichen Material gefertigt werden, so daß eine Erwärmung dieser Teile nicht zu einem Spiel zwischen den Lagern und der Lagerhülse führen kann. Die Welle selbst wird in dem Lagerbock fest eingespannt und damit unverrückbar in einer vorgegebenen Position festgehalten. Die Justierung der Trägeranordnung ist dadurch erheblich einfacher.

Vorzugsweise werden die auf der Welle sitzenden Innenringe der Wälzlager mittels mindestens einer die Achse koaxial umgebenden Distanzhülse zwischen einem Bund der Welle und einer auf diese aufschraubbaren Mutter eingespannt. Grundsätzlich besteht allerdings auch die Möglichkeit, die jeweiligen Lager mit ihrem Innenring auf eine Schulter der Welle aufzusetzen und einzuspannen. Anstelle der Mutter zum Einspannen der Lager können auch andere Mittel verwendet werden, um die Innenringe der Lager in axialer Richtung festzulegen.

Gegebenenfalls kann der Innenring des Lagers auch entfallen, wobei die inneren Wälzkörperbahnen jeweils unmittelbar an einer Schulter der Welle ausgebildet sind. In beiden Fällen ist der Außenring von mindestens einem Wälzlager fest mit der Lagerhülse verbunden, während mindestens einer der Außenringe der Wälzlager durch axiale Federmittel beaufschlagt ist. Dadurch entsteht eine axiale Verschiebung der Lagerhülse, wobei aus beiden Lagern das Spiel herausgedrückt wird. Anschließend kann gegebenenfalls auch das zweite Lager fest mit der Lagerhülse verbunden, beispielsweise verklebt werden.

Um ohne große Justierarbeit die Welle in dem Lagerbock einspannen zu können, ist erfindungsgemäß bei einem U-förmig ausgebildeten Lagerbock an den freien Enden der U-Schenkel jeweils eine offene Aussparung zur Aufnahme eines Lagerzapfens der Welle vorgesehen, wobei die Aussparungen durch einen Bügel schließbar sind und - in Achsrichtung betrachtet - einen prismatischen, von der Aussparungsöffnung weg abnehmenden Querschnitt aufweisen. Durch den Schließbügel wird der jeweilige Lagerzapfen der Welle gegen die Prismenflächen gedrückt, wobei die Welle eine eindeutig definierte vorgegebene Position gegenüber dem Lagerbock einnimmt.

Üblicherweise werden die Schwenkarme durch einen elektromagnetischen Antrieb in Form einer Tauchspulenanordnung verstellt. Dabei sind die Schwenkarme mit einer Spule verbunden, die relativ zu einem ortsfesten Magnetkern verstellbar ist. Gemäß einer besonders bevorzugten Ausführungsform der Erfindung ist vorgesehen, daß das Eisenpaket des den Magnetkern der Tauchspulenanordnung bildenden Elektromagneten als Lagerbock für die Schwenkarme ausgebildet ist. Diese Maßnahme kann jedoch auch unabhängig von der vorstehend beschriebenen Lageranordnung bei einer herkömmlichen Lagerung verwendet werden, wie sie eingangs als Stand der Technik beschrieben wurde.

Weitere Merkmale und Vorteile der Erfindung ergeben sich aus der folgenden Beschreibung, die in Verbindung mit den beigefügten Zeichnungen die Erfindung anhand von Ausführungsbeispielen erläutert. Es zeigen:

Fig. 1        jeweils einen die Achse enthaltenden
bis  4        Halbschnitt durch eine erfindungsgemäße
              Lageranordnung zur Lagerung von Schwenkarmen für Magnetköpfe und

Fig. 5        eine teilweise schematische Explosionsdarstellung einer Trägeranordnung für
              Magnetköpfe eines Magnetplattenlaufwerkes.

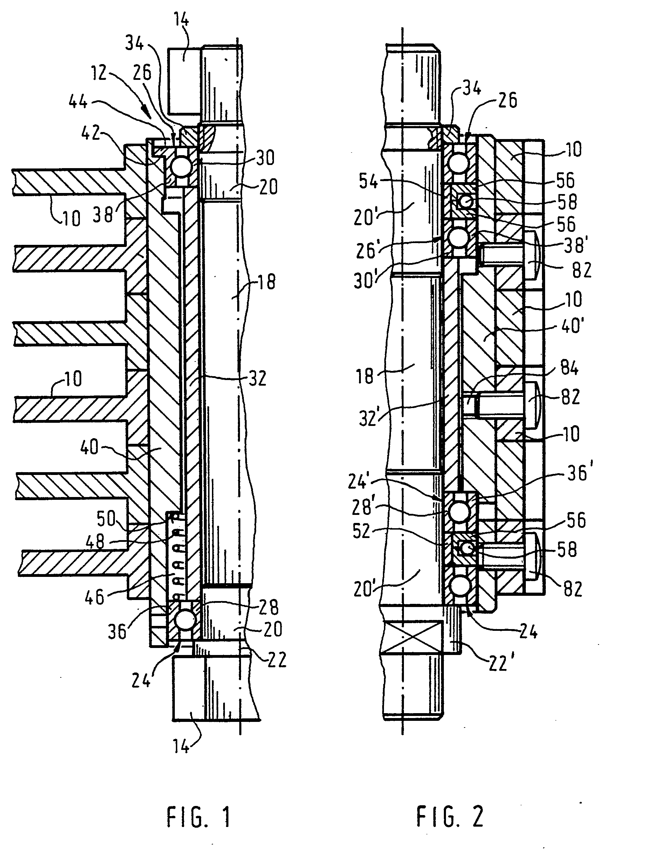

In Fig. 1 erkennt man in einem Halbschnitt Teile von
Schwenkarmen oder Trägerarmen 10 für nichtdargestellte
Magnetköpfe, die den Magnetplatten eines Magnetplattenlaufwerkes zugeordnet sind. Die Trägerarme 10 sind zu
einem Paket aufeinander gestapelt und fest miteinander
verbunden. Das Trägerarmpaket ist mittels einer allgemein mit 12 bezeichneten Lageranordnung in den
U-Schenkeln 14 eines U-förmigen Lagerbockes 16 (Fig.
5) schwenkbar gelagert. Zunächst soll im weiteren die
Lageranordnung 12 näher erläutert werden.

Die Lageranordnung umfaßt eine Welle 18, die nahe
ihren axialen Enden jeweils einen durchmessergrößeren
Abschnitt 20 aufweist, deren einer(in Fig. 1 der untere) an seinem axial äußeren Ende durch einen Bund
22 abgeschlossen ist. Auf den Abschnitt 20 ist jeweils
ein Kugellager 24, 26 aufgesteckt. Das Kugellager 24
sitzt mit seinem Innenring 28 auf dem Bund 22 auf und
ist von dem Innenring 30 des Kugellagers 26 durch eine
die Welle 18 umgebende Distanzhülse 32 getrennt. Der
das Kugellager 26 tragende Abschnitt 20 der Welle 18
weist an seinem axial äußeren Ende ein Gewinde auf,
auf das eine Mutter 34 aufgeschraubt ist, welche den
Innenring 30 des Kugellagers 26 gegen die Distanzhülse 32 und damit den Innenring 28 des Kugellagers 24

- 6 -

0157017

gegen den Bund 22 der Welle 18 spannt. Damit sind die Innenringe 30 und 28 der beiden Kugellager 26 und 24 unbeweglich auf der Welle 18 gehalten.

Die Außenringe 36 und 38 der Kugellager 24 bzw. 26 stecken in einer Lagerhülse 40, welche die Welle 18 koaxial umgibt und vorzugsweise aus dem gleichen Material wie die Lager und die Welle gefertigt ist. An dem in der Fig. 1 oberen Ende weist die Lagerhülse 40 eine achsnormale Schulter 42 auf. Sie dient zur Auflage eines Radialflansches 44 des Außenringes 38 des Kugellagers 26. In ihrem unteren Abschnitt ist die Lagerhülse 40 mit einer Ausdrehung 46 versehen, in der eine Schraubendruckfeder 48 koaxial zur Distanzhülse 32 angeordnet ist. Die Schraubendruckfeder 48 stützt sich einerseits auf dem Außenring 36 des Kugellagers 24 und andererseits an der achsnormalen Endfläche 50 der Ausdrehung 46 ab. Durch den Federdruck wird einerseits die Lagerhülse 40 und mit ihr der Außenring 38 des Kugellagers 26 nach oben gedrückt, während gleichzeitig der Außenring 36 des Kugellagers 24 nach unten gedrückt wird. Dadurch wird das Lagerspiel aus den beiden Kugellagern 24 und 26 herausgedrückt. Nach der Montage des Lagers und dem Ausgleich des Lagerspiels können die beiden Außenringe 36 und 38 mit der Lagerhülse 40 starr verbunden, beispielsweise verklebt werden. Eine Veränderung der Lage ist nicht mehr zu befürchten, da sämtliche Teile aus demselben Material hergestellt sein können.

Fig. 2 zeigt eine abgewandelte Ausführungsform der Lageranordnung, wobei gleiche Teile wiederum mit gleichen Bezugszeichen versehen sind. Bei der in Fig. 2 dargestellten Ausführungsform sind die durchmessergrößeren Abschnitte 20' der Welle 18 axial länger als die Abschnitte 20 bei der in der Fig. 1 dargestellten Ausführungsform, so daß auf jedem Abschnitt 20' zwei Kugellager 24 und 24' bzw. 26 und 26' Platz finden. Die Innenringe 30' und 28' der Lager 26' bzw. 24' sind wiederum durch eine Distanzhülse 32' voneinander getrennt. Die einander benachbarten Lager 24 und 24' bzw. 26 und 26' sind jeweils durch einen Distanzring 52 bzw. 54 voneinander getrennt, so daß die Kugellager 24, 24', 26' und 26 mittels der Distanzhülse 32' und der Distanzringe 52 und 54 zwischen dem Wellenbund 22' und der Mutter 34 eingespannt sind. Zwischen den Außenringen benachbarter Kugellager 26 und 26' bzw. 24 und 24' ist jeweils eine Ringfederanordnung angeordnet, die jeweils aus zwei Ringscheiben 56 und einem dazwischen angeordneten elastischen Ring 58 besteht. Diese Ringfederanordnung drückt die Außenringe einander benachbarter Lager 26 und 26' bzw. 24 und 24' auseinander, so daß das Lagerspiel verschwindet. Die Kugellager 24, 24', 26' und 26 sind wiederum von der Lagerhülse 40' umgeben, die nach der Montage der Lageranordnung gegebenenfalls mit den Außenringen der Kugellager verklebt werden kann.

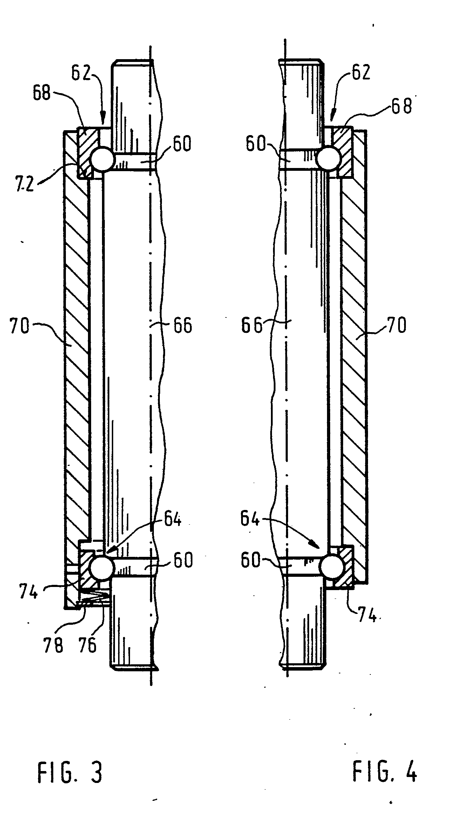

Die Fig. 3 und 4 zeigen eine weitere Ausführungsform der Lageranordnung, bei der die inneren Kugellaufbahnen 60 der Kugellager 62, 64 jeweils an einer Schulter der Welle 66 ausgebildet sind. Ein Innenring entfällt in diesen Fällen. Bei den beiden in den Fig. 3 und 4 dargestellten Ausführungsbeispielen wird der Außenring 68 des Kugellagers 62 in die Lagerhülse 70 eingepreßt, bis er auf einer Schulter 72 aufsitzt. Der Außenring 74 des anderen Kugellagers 64 wird entweder mit Sternfedern 76 angefedert (Fig. 3) oder wie der Außenring 68 unter genauer Anpassung derart in die Lagerhülse 70 eingepreßt (Fig. 4), daß die Lagerhülse 70 spielfrei gegenüber der Welle 66 ist. Bei der Ausführungsform gemäß Fig. 3 drückt die Sternfeder 76, die sich an einem in die Lagerhülse 70 eingesetzten Sprengring 78 abstützt, das Spiel aus den beiden Kugellagern 62 und 64. Nach der Montage der Lageranordnung wird der Außenring 74 vorzugsweise mit der Lagerhülse 70 verklebt.

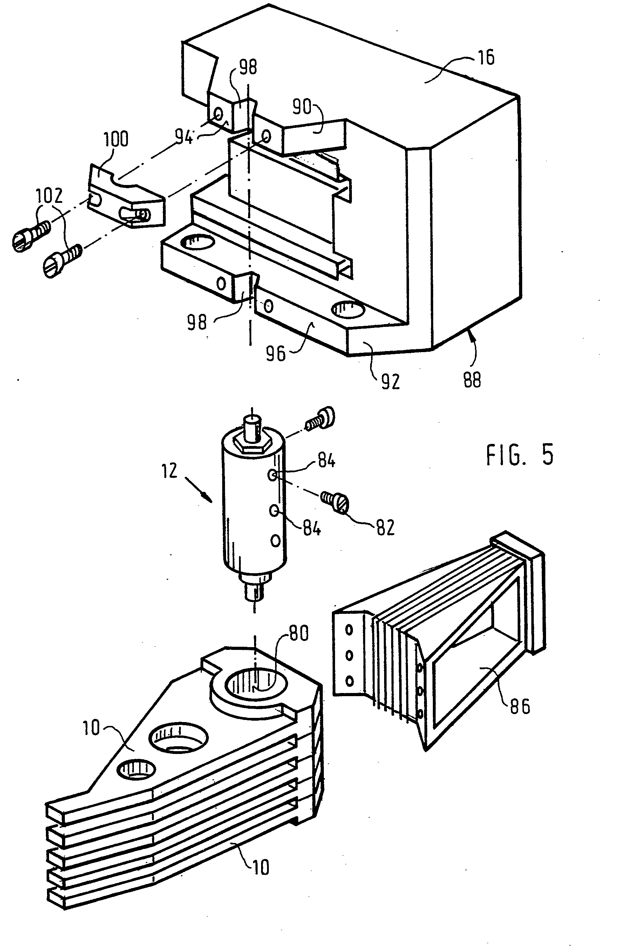

Eine gemäß den Fig. 1 bis 4 ausgebildete und vormontierte Lageranordnung 12 wird in die miteinander fluchtenden Lagerbohrungen 80 der zu einem Paket übereinander gestapelten Schwenkarme 10 eingesteckt und in der aus der Fig. 2 ersichtlichen Weise durch Schrauben 82 mit dem Schwenkarmpaket verbunden, wobei die Schrauben 82 in radial gerichtete Gewindebohrungen (84) in der Lagerhülse 40' (40; 70) eingreifen. An das Schwenkarmpaket wird ferner eine Tauchspule 86 angeschraubt, die in Verbindung mit dem in Fig. 5 dargestellten Elektromagneten 88 als Stellantrieb für die Schwenkarme 10 dient. Das den Magnetkern bildende Eisenpaket des Elektromagneten 88 bildet in dem in der Fig. 5 dargestellten Ausführungsbeispiel gleichzeitig den annähernd U-förmig ausgebildeten Lagerbock 16, dessen U-Schenkel 90 und 92 an ihren freien Stirnkanten 94, 96 jeweils eine nach außen offene prismatische Aussparung 98 aufweisen. In diese Aussparungen werden die axialen Enden der Welle 18 der aus der Lageranordnung 12, den Schwenkarmen 10 und der Tauchspule 86 bestehenden Einheit eingesetzt und mit Hilfe der Schließbügel 100 eingespannt, die mit Schrauben 102 an der jeweiligen Endfläche 94 bzw. 96 festgeschraubt werden. Durch die prismatische Form der Aussparungen 98 ist ein fester spielfreier Sitz der Welle 18 in einer wohldefinierten vorgegebenen Position gegenüber dem Lagerbock 16 sichergestellt.

Die vorstehende Beschreibung zeigt, daß mit der erfindungsgemäßen Trägeranordnung eine spielfreie, präzise und einfach zu montierende Lagerung der Schwenk- oder Trägerarme für die Magnetköpfe erreicht werden kann, bei der sich auch bei einer Erwärmung das Spiel nicht verändert.

TRÄGERANORDNUNG FÜR MAGNETKÖPFE EINES
MAGNETPLATTENLAUFWERKES

P a t e n t a n s p r ü c h e

1. Trägeranordnung für die Magnetköpfe eines Magnetplattenlaufwerkes, umfassend eine Mehrzahl von die Magnetköpfe tragenden Schwenkarmen, die mittels einer gemeinsamen Welle und Wälzlagern in einem Lagerbock schwenkbar gelagert sind, dadurch gekennzeichnet, daß die Schwenkarme (10) an einer Lagerhülse (40; 40'; 70) befestigt sind, die ihrerseits mittels der Wälzlager (24, 26; 24', 26'; 62, 64) auf der in dem Lagerbock (16) fest einspannbaren Welle (18; 66) drehbar gelagert ist.

2. Trägeranordnung nach Anspruch 1, dadurch gekennzeichnet, daß die auf der Welle (18) sitzenden Innenringe (28, 30; 28', 30') der Wälzlager ( 24, 26; 24', 26') mittels mindestens einer die Welle (18) koaxial umgebenden Distanzhülse (32; 32', 52, 54) zwischen einem Bund (22; 22') der Welle (18) und einer auf diese aufschraubbaren Mutter (34) eingespannt sind.

3. Trägeranordnung nach Anspruch 1, dadurch gekennzeichnet, daß die inneren Wälzkörperbahnen (60) jeweils unmittelbar an einer Schulter der Welle (66) ausgebildet sind.

4. Trägeranordnung nach einem der Ansprüche 1 bis 3, dadurch gekennzeichnet, daß der Außenring (36, 38; 36', 38'; 68, 74) mindestens eines der Wälzlager (24, 26; 24', 26'; 62, 64) fest mit der Lagerhülse (40; 40'; 70) verbunden, vorzugsweise verklebt ist.

5. Trägeranordnung nach einem der Ansprüche 1 bis 4, dadurch gekennzeichnet, daß mindestens einer der Außenringe (36, 38; 36', 38'; 68, 74) der Wälzlager (24, 26; 24', 26'; 62, 64) in axialer Richtung relativ zur zugehörigen inneren Kugellaufbahn durch axial wirkende Federmittel (48; 56, 58; 76) vorgespannt ist.

6. Trägeranordnung nach Anspruch 2 und 5, dadurch gekennzeichnet, daß der Außenring (38) des einen Wälzlagers (26) mit einem radialen Flansch (44) auf einer achsnormalen Schulter (42) der Lagerhülse (40) aufliegt und daß zwischen dem Außenring (36) des sich an dem Bund (22) der Welle (18) abstützenden anderen Wälzlagers (24) und einer achsnormalen Stützfläche (50) der Lagerhülse (40) eine Druckfeder (48) angeordnet ist.

7. Trägeranordnung nach Anspruch 2 und 5, dadurch gekennzeichnet, daß an jedem axialen Endabschnitt (20') der Welle (18) eine Mehrzahl von Wälzlagern (24, 24', 26, 26') angeordnet ist, deren Innenringe (28, 28', 30, 30') durch Distanzhülsen (52, 54) voneinander getrennt sind und zwischen deren Außenringen (36, 36', 38, 38')

- 12 -

0157017

jeweils Druckfedermittel (56, 58) angeordnet sind.

8. Trägeranordnung nach einem der Ansprüche 1 bis 7, wobei der Lagerbock U-förmig ausgebildet ist, dadurch gekennzeichnet, daß an den freien Enden der U-Schenkel (90, 92) offene Aussparungen (98) zur Aufnahme der axialen Enden der Welle (18, 66) vorgesehen sind, die durch einen Bügel (100) schließbar sind und - in Achsrichtung betrachtet - einen prismatischen, von der Aussparungsöffnung weg abnehmenden Querschnitt aufweisen.

9. Trägeranordnung insbesondere nach einem der Ansprüche 1 bis 8, wobei die Schwenkarme mittels einer Tauchspulenanordnung verschwenkbar sind, deren Spule mit den Schwenkarmen verbunden ist, dadurch gekennzeichnet, daß das Eisenpaket des den Magnetkern der Tauchspulenanordnung bildenden Elektromagneten (88) als Lagerbock (16) für die Schwenkarme (10) ausgebildet ist.

FIG. 1

FIG. 2

NIXDORF COMPUTER AG

FIG. 3

FIG. 4

3/3

0157017

FIG. 5

Europäisches Patentamt

# EUROPÄISCHER RECHERCHENBERICHT

0157017

| | EINSCHLÄGIGE DOKUMENTE | | EP 84116480.9 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| Y | <u>DE - A1 - 3 016 630</u> (PHILIPS)<br><br> * Fig. 1; Seite 3, Zeile 34 - Seite 4, Zeile 5 *<br><br>-- | 1 | G 11 B 21/16 |
| Y | <u>DE - A1 - 3 217 343</u> (PHILIPS)<br><br> * Fig. 3; Seite 12, Zeile 10 - Seite 13, Zeile 3 *<br><br>-- | 1 | |
| A | <u>DE - A1 - 3 218 934</u> (PHILIPS)<br><br> * Fig. 3; Seite 12, Zeile 21 - Seite 13, Zeile 15 *<br><br>-- | 1 | |
| A | <u>DE - A1 - 3 218 895</u> (PHILIPS)<br><br> * Fig. 3; Seite 11, Zeile 33 - Seite 12, Zeile 26 *<br><br>---- | 1 | RECHERCHIERTE SACHGEBIETE (Int. Cl.4)<br><br>G 11 B 17/00<br>G 11 B 5/00<br>H 01 F 1/00<br>H 01 F 10/00<br>G 11 B 21/00<br>G 11 B 3/00 |

Der vorliegende Recherchenbericht wurde für alle Patentansprüche erstellt.

| Recherchenort | Abschlußdatum der Recherche | Prüfer |
|---|---|---|
| WIEN | 02-07-1985 | BERGER |